# EUROPEAN PATENT APPLICATION

(11) **EP 3 903 651 A1**
(43) Date of publication of application: **03.11.2021**
(21) Application number: 19903002.4
(22) Date of filing: 27.12.2019
(51) Int. Cl.: A47J 27/00, F24C 7/02, G06Q 50/10, G16Y 10/80, G16Y 20/40, G16Y 40/35

(54) **COOKING MANAGEMENT METHOD, COOKING MANAGEMENT SYSTEM, COOKING MANAGEMENT SERVER, AND COOKING EQUIPMENT**

(30) Priority: 27.12.2018 JP 2018244194
(71) Applicant: Tiger Corporation, Kadoma-shi, Osaka 571-8571 (JP)
(72) Inventor: ASAMI, Akiko, Kadoma-shi Osaka 571-8571 (JP)
(74) Representative: Becker, Eberhard
(86) International application number: PCT/JP2019/051526
(87) International publication number: WO 2020/138459

(57) **Abstract**

The disclosure provides a cooking management method, a cooking management system, a cooking management server, and a cooking appliance capable of realizing cooking suitable for a user with less labor for the user. The cooking management method includes: acquiring consumer goods shipping information associated with a product identification code corresponding to a cooking appliance M; acquiring user information which is information about a user of the cooking appliance M corresponding to the product identification code; generating a custom sequence suitable for the user based on the consumer goods shipping information and the user information; and enabling the cooking appliance corresponding to the product identification code to download and execute the custom sequence.

## Description

### BACKGROUND

### Technical Field

The invention relates to a cooking management method, a cooking management system, a cooking management server, and a cooking appliance.

### Description of Related Art

A conventional technology is disclosed in, for example, Patent Document 1 below. The technology described in the document relates to a rice cooker which is an example of the cooking appliance, and selects rice of a brand that the user prefers from all the brands provided by a rice store and places an order automatically based on information such as the amount of stock, brand, user's preference, daily amount of rice cooked, etc. and sends a cooking sequence according to various data such as the brand of the rice ordered, user's preference, the amount of cooking when the user normally cooks rice, etc. to the cooking appliance of the user.

### Related Art

### Patent Document

[Patent Document 1] Japanese Laid-Open No. 2001-299581

### SUMMARY

### Problems to be Solved

However, the technology described in the above document provides no specific proposal as to how to construct the cooking sequence to be provided to the user, and lacks feasibility.

Therefore, the invention provides a cooking management method, a cooking management system, a cooking management server, and a cooking appliance capable of realizing cooking suitable for the user with less labor for the user.

### Means for Solving the Problems

A cooking management method according to the invention includes: acquiring consumer goods shipping information associated with a product identification code corresponding to a cooking appliance; acquiring user information which is information about a user of the cooking appliance corresponding to the product identification code; generating a custom sequence suitable for the user based on the consumer goods shipping information and the user information; and enabling the cooking appliance corresponding to the product identification code to download and execute the custom sequence.

In the above configuration, preferably, the consumer goods shipping information is converted into a plurality of consumer goods characteristic elements; the consumer goods characteristic elements and the user information are converted into a cooking parameter; and the custom sequence is generated based on the cooking parameter.

A cooking management system according to the invention includes: an acquisition part acquiring consumer goods shipping information associated with a product identification code corresponding to a cooking appliance; a management memory part acquiring user information which is information about a user of the cooking appliance corresponding to the product identification code; and a sequence generation part generating a custom sequence suitable for the user based on the consumer goods shipping information and the user information, wherein the cooking appliance corresponding to the product identification code is enabled to download and execute the custom sequence.

In the above configuration, preferably, the custom sequence includes a custom sequence based on preference data reflecting preference of the user, and a custom sequence based on expert characteristic data; the cooking appliance includes a preset mode that is preset, and a custom mode in which parameters are settable afterward; and a preference mode reflecting the preference data, and a wonder experience mode reflecting the expert characteristic data having characteristics different from the preference data are selectively executable as the custom mode.

A cooking management server according to the invention includes: an acquisition part acquiring consumer goods shipping information associated with a product identification code corresponding to a cooking appliance; a management memory part acquiring user information which is information about a user of the cooking appliance corresponding to the product identification code; and a sequence generation part generating a custom sequence suitable for the user based on the consumer goods shipping information and the user information, wherein the cooking appliance corresponding to the product identification code is enabled to download and execute the custom sequence.

A cooking appliance according to the invention downloads and executes a custom sequence suitable for a user, which is generated based on consumer goods shipping information associated with a product identification code, and user information which is information about the user corresponding to the product identification code.

According to the invention, a custom sequence is constructed reflecting the consumer goods shipping information (for example, brand [type] of rice or coffee beans, date of production, etc.) and the user information (preference information, environment information, etc.) and considering characteristics of the cooking appliance used by the user and characteristics of the rice shipped to the user, and the custom sequence is executed with the cooking appliance. Therefore, according to the invention, it is possible to realize cooking suitable for the user with less labor of the user with the cooking appliance.

### BRIEF DESCRIPTION OF THE DRAWINGS

FIG. 1 is a model diagram illustrating an outline of a cooking management system.

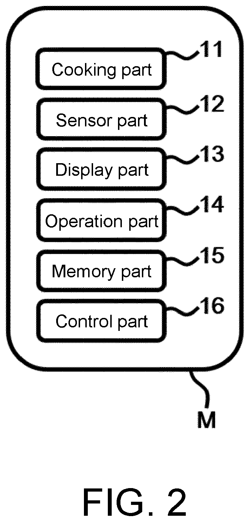

FIG. 2 is a block diagram illustrating an outline of functions of a cooking appliance.

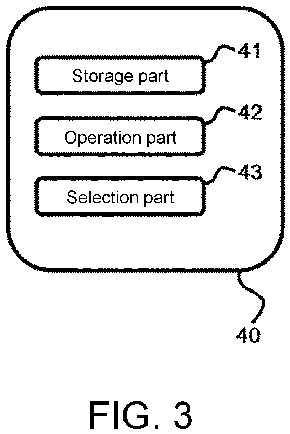

FIG. 3 is a block diagram illustrating an outline of functions of a cooking management server.

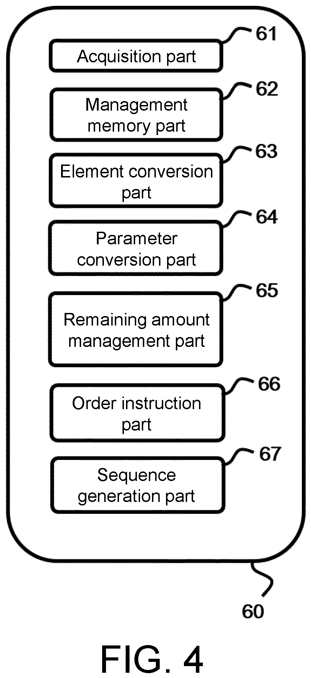

FIG. 4 is a block diagram illustrating an outline of functions of a sales management server.

### DESCRIPTION OF THE EMBODIMENTS

Hereinafter, an embodiment which is an example of the invention will be described with reference to the drawings. Nevertheless, the scope of the invention is not limited to the contents shown in the embodiment.

### [First Embodiment]

First, the first embodiment will be described. In the first embodiment, a cooking appliance M is a rice cooker.

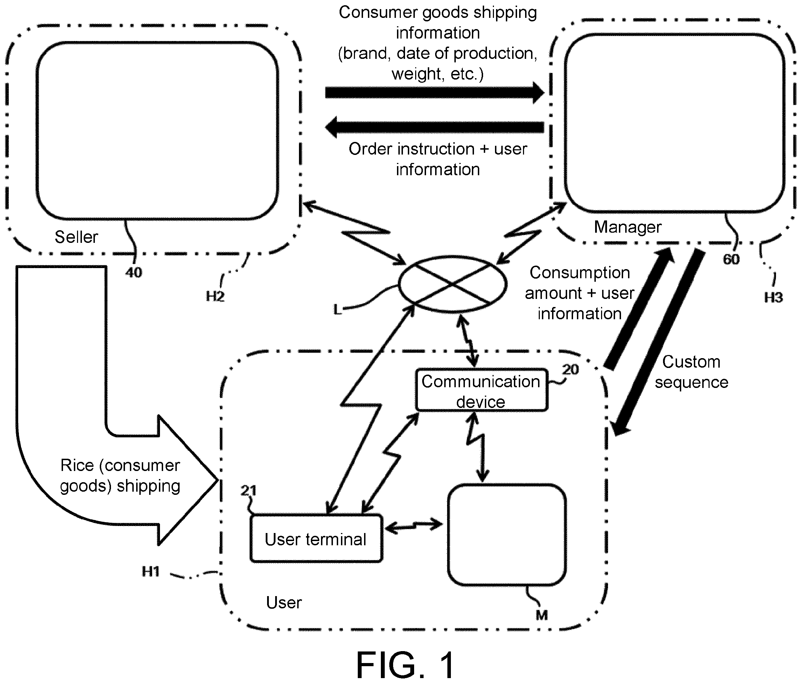

As shown in FIG. 1, a cooking management system is a system for exchanging information and goods (consumer goods, etc.) between a user HI who owns the cooking appliance M, a seller H2 who handles and sells consumer goods such as rice, and a manager H3 who manages the cooking appliance M of each user HI. To add an explanation, in the cooking management system, information is exchanged (transmitted/received) via an Internet line L between the cooking appliance M on the side of the user H1, a sales management server 40 on the side of the seller H2, and a cooking management server 60 on the side of the manager H3.

### [User H1]

A rice cooker is provided on the side of the user H1 as an example of the cooking appliance M used by the user HI. A unique product identification code is associated with the cooking appliance M. The product identification code is different for each cooking appliance M. In addition, a product number to which the cooking appliance M belongs can be derived based on the product identification code.

The cooking appliance M is provided with a communication function capable of short-distance wireless communication. Here, Bluetooth (registered trademark), Wi-Fi (registered trademark), etc. are examples of the standards of the short-distance wireless communication.

Preferably, a stationary communication device 20 having a short-distance wireless communication function and a long-distance wireless communication function is provided on the side of the user HI. The communication device 20 is capable of communicating with the cooking appliance M by short-distance wireless communication.

The cooking appliance M includes a cooking part 11 that heats and cooks an object to be cooked, such as rice and water, a sensor part 12 that acquires an upper portion of the cooking part 11, a display part 13 capable of displaying information, an operation part 14 capable of inputting various operations, a memory part 15 capable of storing a cooking sequence, etc., and a control part 16 that controls the cooking part 11, etc.

The cooking part 11 is provided with an inner pot for putting cooked rice containing rice and water, and a heating means capable of heating the inner pot. For example, a bottom heater capable of heating the bottom surface of the inner pot, a side heater capable of heating the side surface of the inner pot, and a lid heater capable of heating the upper side of the cooked rice are provided as the heating means.

The sensor part 12 includes a center sensor capable of measuring the temperature of the center of the bottom surface of the inner pot, and a steam sensor capable of detecting boiling of the cooked rice. Various devices such as a segmenter and a liquid crystal display part can be adopted as the display part 13. The operation part 14 is provided with various operation switches such as a selection switch for selecting a rice cooking mode (cooking mode), a start switch for executing a rice cooking operation, a warming switch for performing a warming on/off operation, etc.

The memory part 15 stores a basic sequence for each rice cooking mode (cooking mode). The basic sequence is unique to the product number that reflects the shape and characteristics of the product number of the cooking appliance M corresponding to the product identification code. The basic sequence of the rice cooker includes a preliminary process, a water absorption process for making rice absorb water, a temperature raising process for raising the water temperature, a cooking process for cooking rice, an additional cooking process for overheating rice further, a steaming process for steaming rice, and a warming process for keeping cooked rice warm.

Further, a custom sequence described later can be installed in the memory part 15. In other words, the cooking appliance M is provided with a sequence memory function for storing the cooking sequence. The custom sequence may be added to the area of the memory part 15 every time the custom sequence is downloaded. Alternatively, the custom sequence may be overwritten in the corresponding area of the memory part 15 every time the custom sequence is downloaded.

The cooking appliance M has a plurality of cooking modes. "White rice mode", "fast cooking mode", "porridge mode", "brown rice mode", "barley rice mode", "rice ball cooking mode", "sushi rice cooking mode", etc. are examples of the cooking modes.

The control part 16 controls the cooking part 11 based on the information of the sensor part 12 and the sequence read from the memory part 15 and performs control to execute a predetermined rice cooking operation. Further, the control part 16 may control information displayed on the display part 13.

The control part 16 detects the sum of rice put in the inner pot of the cooking part 11 based on a temperature rising gradient when heating is performed during the rice cooking sequence operation. In other words, the rice cooker which is the cooking appliance M has a sum detection function for detecting the sum of rice that has been put in. The sum detection can be performed in the temperature raising process included in the basic sequence.

A portable user terminal 21 is preferably provided on the side of the user HI. The user terminal 21 has a short-distance wireless communication function and/or a long-distance wireless communication function. The user terminal 21 is, for example, a smartphone, a tablet terminal, a personal computer, etc. Preferably, a dedicated application suitable for the cooking appliance M is installed in the user terminal 21.

The user HI can confirm consumer goods shipping information acquired from the sales management server 40 of the seller H2 and confirm information such as the current cumulative consumption amount and the current remaining amount of rice (consumer goods) acquired from the cooking management server 60 through the user terminal 21.

### [Seller H2]

The sales management server 40 is provided on the side of the seller H2. The sales management server 40 has a communication function and is connected to the Internet line L. The sales management server 40 is provided with a storage part 41 for storing a large amount of consumer goods information. The consumer goods information stored in the storage part 41 is updated at any time. Further, the sales management server 40 is provided with an operation part 42 that operates an EC site based on the information stored in the storage part 41. The operation part 42 enables the user HI to use the EC (Electronic Commerce) site of the seller H2 through the user terminal 21.

In the sales management server 40, a browsing history, an order history, and user information acquired from outside are registered for each user identification code unique to the user HI. The user identification code is associated with the product identification code of the cooking appliance M.

The browsing history is a history of products that the user HI corresponding to the user identification code browses on the EC site of the seller H2. The order history is a history of orders placed by the user HI corresponding to the user identification code on the EC site of the seller H2. The user information is sent from the cooking management server 60 to the sales management server 40 in association with the product identification code.

In the storage part 41 of the sales management server 40, ranking information is stored for each category of rice as consumer goods based on an arbitrary criterion according to the occasion.

The sales management server 40 is provided with a selection part 43 for selecting rice of a type recommended for the user HI based on an order instruction when acquiring the order instruction from the cooking management server 60. When acquiring the order instruction associated with the product identification code with the user information from the cooking management server 60, the sales management server 40 selects rice of a type most recommended for the user HI corresponding to the product identification code with the selection part 43 based on the browsing history, the order history, the user information, the ranking information, etc. associated with the user identification code corresponding to the product identification code. The type of rice includes the brand such as varieties, date of production (whether the rice is old or new), etc. At the same time, the amount of rice to be shipped is set based on a previous order amount included in the user information.

The sales management server 40 ships the selected type of rice in the set amount to an address of the user HI corresponding to the user identification code. Thus, rice that reflects the preference of the user HI is delivered to the user HI. At this time, the consumer goods shipping information including the selected type of rice (brand) and the amount of shipped rice is associated with the product identification code and sent from the sales management server 40 to the cooking management server 60.

### [Manager H3]

The cooking management server 60 is installed on the side of the manager H3. The cooking management server 60 has a communication function and is connected to the Internet line L. The manager H3 is, for example, a manufacturer of the cooking appliance M.

The cooking management server 60 is provided with an acquisition part 61 that acquires the consumer goods shipping information from the sales management server 40 on the side of the seller H2. The acquisition part 61 acquires the consumption amount (consumption sum) and the user information from the cooking appliance M on the side of the user HI for each product identification code (user HI).

A management memory part 62 is provided for storing an element database in which a consumer goods characteristic element corresponding to a consumer goods identification code (brand, date of production) included in the consumer goods shipping information is associated with each consumer goods identification code. In the management memory part 62, a basic sequence composed of a plurality of factors is stored for each product number corresponding to the product identification code.

If the consumer goods are rice, the water content (dryness) per unit amount, the protein content per unit amount, the carbohydrate content per unit amount, the lipid content per unit amount, the ash content per unit amount, granularity (shape and size of grain), etc. are examples of the consumer goods characteristic element. For example, the protein content per unit amount, the carbohydrate content per unit amount, the lipid content per unit amount, the ash content per unit amount, and the granularity (shape and size of grain) can be obtained based on the brand of rice corresponding to the consumer goods identification code. Further, for example, the water content per unit amount can be obtained based on the date of production of rice corresponding to the consumer goods identification code.

In the cooking management server 60, an element conversion part 63 is provided for converting the consumer goods identification code included in the consumer goods shipping information into a plurality of consumer goods characteristic elements based on the element database stored in the management memory part 62.

In the cooking management server 60, a parameter conversion part 64 is provided for converting the value of the consumer goods characteristic element into a cooking parameter. The cooking parameter is multiplied by each of the factors that make up the basic sequence corresponding to the product type of the cooking appliance M, and is used to construct the custom sequence. Further, the parameter conversion part 64 also converts the user information into a cooking parameter.

In addition, the management memory part 62 of the cooking management server 60 is provided with a user database for registering a large amount of user information corresponding to the product identification code. For example, the order history of the consumer goods, the remaining amount of the consumer goods, and a usage history of the cooking appliance M are recorded as the user information registered in the user database. The user information registered in the cooking management server 60 is appropriately updated every time the information is acquired from the sales management server 40 or the cooking appliance M.

The cooking management server 60 is provided with a remaining amount management part 65 for monitoring the remaining amount of the consumer goods for each product identification code based on the consumption amount sent from the cooking appliance M.

When acquiring the consumer goods shipping information associated with the product identification code, the cooking management server 60 updates the order history and the value of the remaining amount of the consumer goods included in the user information corresponding to the product identification code.

When acquiring the consumer goods shipping information corresponding to the product identification code from the sales management server 40 on the side of the seller H2, the remaining amount management part 65 registers the shipping amount of the shipped consumer goods as an initial amount in the area corresponding to the product identification code. Then, every time the user HI cooks with the cooking appliance M, the cooking management server 60 acquires information of the consumption sum (consumption amount) from the cooking appliance M based on the sum detection function described later. Therefore, the consumption amount is calculated based on the consumption sum and rice information, and the accumulated consumption amount which is an accumulated value of the rice consumption amount of the user HI is obtained and registered. A surplus amount is a value obtained by multiplying the previous order amount by a surplus rate.

If a threshold amount obtained by adding the surplus amount to the accumulated consumption amount exceeds the initial amount, the cooking management server 60 attaches the user information to the product identification code and automatically performs an order instruction to the side of the seller H2 with an order instruction part 66. A timing at which the consumption sum is sent from the cooking appliance M to the cooking management server 60 can be performed at a timing of switching to the warming process in the rice cooking operation of the cooking appliance M, for example. In that case, the order instruction from the cooking management server 60 to the sales management server 40 is performed, for example, at the timing of switching to the warming process in the rice cooking operation of the cooking appliance M.

### [Generation of custom sequence]

The cooking management server 60 is provided with a sequence generation part 67. The sequence generation part 67 generates a custom sequence suitable for the user HI based on the product identification code and the cooking parameter. The generated custom sequence is uploaded to the cooking appliance M of the corresponding product identification code, and the cooking appliance M installs the custom sequence in the memory part 15 and becomes capable of performing the rice cooking operation (cooking operation) based on the custom sequence. In other words, the cooking management server 60 uploads the custom sequence suitable for the cooking appliance M, the consumer goods, and the user HI of the cooking appliance M to the cooking appliance M corresponding to the product identification code, and enables the cooking appliance M to execute the custom sequence.

When the water content per unit amount in the consumer goods characteristic element is large, the cooking parameter is set so that rice is cooked to be harder than the reference, and conversely, when the water content per unit amount is small, the cooking parameter is set so that rice is cooked to be softer than the reference.

Preference information such as the cooking mode that the user HI selects in the cooking appliance M is uploaded to the cooking management server 60 through the Internet line L in association with the product identification code. In the cooking management server 60, the user information associated with the product identification code is updated with the uploaded information relating to the cooking mode.

Further, for example, the preference information may include preference of the user HI (for example, information such as "hard rice is preferred" and "soft rice is preferred").

The basic sequence of the rice cooker includes the water absorption process, the temperature raising process, the cooking process, the additional cooking process, the steaming process, and the warming process. The timer time, the target setting temperature, the heating intensity (energization amount), the heating frequency (energization duty ratio), etc. in each process are given as the factors by which the cooking parameter included in the basic sequence of the rice cooker is multiplied. These factors are multiplied by the cooking parameter to generate the custom sequence.

When an average value of room temperature data in environment information is higher than the reference, the cooking parameter is set to reduce the heating amount in the warming process, and conversely, when the average value is lower than the reference, the cooking parameter is set to increase the heating amount in the warming process.

Further, for example, when an average value of water temperature data in the environment information is higher than the reference, the cooking parameter is set to reduce the heating amount in the water absorption process, and conversely, when the average value is lower than the reference, the cooking parameter is set to increase the heating amount in the water absorption process.

When it is found by the cooking management server 60 on the side of the manager H3 that the remaining amount of the rice consumed by the rice cooker, which is the cooking appliance M on the side of the user H1, falls below a certain amount, the cooking management server 60 on the side of the manager H3 automatically places an order to the sales management server 40 on the side of the seller H2, and the sales management server 40 automatically selects rice most recommended for the user HI and sends the rice to the user HI. Therefore, the user HI can easily replenish the recommended rice without being troubled by management of the remaining amount of rice, selection of rice by himself/herself, and buying or ordering rice.

Furthermore, a custom sequence corresponding to the automatically ordered rice and according to the usage status of the user HI is automatically generated, and the custom sequence is automatically installed in the cooking appliance M of the user HI. Therefore, it is possible to realize optimal rice cooking that reflects the ordered rice and the preference of the user HI.

It is supposed that the user HI uses the user identification code to purchase the cooking appliance M associated with the product identification code and consumer goods such as rice together on the EC site of seller H2, and the user HI pays the seller H2 the price of the cooking appliance M and the price of the consumer goods such as rice. Then, an amount obtained by subtracting the commission of the seller H2 from the price of the cooking appliance M and an amount obtained by multiplying the price of the consumer goods such as rice by a predetermined referral fee rate are paid to the manager H3 by the seller H2.

Next, the consumer goods such as rice are consumed, and the user HI uses the user identification code to purchase new consumer goods such as rice based on the order instruction relating to the cooking appliance M on the EC site of the seller H2, and the user HI pays the seller H2 the price of the new consumer goods such as rice. Then, the seller H2 pays an amount obtained by multiplying the purchase price of the new consumer goods such as rice by the referral fee rate of the manager H3 to the manager H3. Thereby, the manager H3 becomes a profit model in which, every time the user HI purchases new consumer goods such as rice through the seller H2, the amount obtained by multiplying the price of the consumer goods such as rice by the referral fee rate is obtained as the referral fee.

As described above, in the cooking management method of the present embodiment, the consumer goods shipping information associated with the product identification code corresponding to the cooking appliance M is acquired, the user information that is information about the user of the cooking appliance M corresponding to the product identification code is acquired, a custom sequence suitable for the user is generated based on the consumer goods shipping information and the user information, and the cooking appliance M corresponding to the product identification code is enabled to download and execute the custom sequence.

In addition, in the above cooking management method, the consumer goods shipping information is converted into a plurality of consumer goods characteristic elements, the consumer goods characteristic elements and the user information are converted into cooking parameters, and the custom sequence is generated based on the cooking parameters.

Further, the cooking management system of the present embodiment includes the acquisition part 61 that acquires the consumer goods shipping information associated with the product identification code corresponding to the cooking appliance M, the management memory part 62 that acquires the user information that is information about the user of the cooking appliance M corresponding to the product identification code, and the sequence generation part 67 that generates a custom sequence suitable for the user based on the consumer goods shipping information and the user information, and the cooking appliance M corresponding to the product identification code is enabled to download and execute the custom sequence.

Furthermore, the cooking management server of the present embodiment includes the acquisition part that acquires the consumer goods shipping information associated with the product identification code corresponding to the cooking appliance M, the management memory part that acquires the user information that is information about the user of the cooking appliance M corresponding to the product identification code, and the sequence generation part that generates a custom sequence suitable for the user based on the consumer goods shipping information and the user information, and the cooking appliance M corresponding to the product identification code is enabled to download and execute the custom sequence.

In addition, in the cooking appliance M of the present embodiment, the custom sequence suitable for the user generated based on the consumer goods shipping information associated with the product identification code and the user information that is information about the user corresponding to the product identification code is downloaded and executed.

Hereinafter, modified examples of the first embodiment will be described. The modified examples can be combined with each other if no contradiction occurs.
(1) The above-described first embodiment illustrates that the consumption amount (consumption sum) of rice is obtained using the sum detection function of the cooking appliance M. However, the invention is not limited thereto. For example, the cooking appliance M may be provided with a weight sensor (weight detection function). The weight of the rice put into the inner pot may be obtained by the weight sensor, and the consumption amount of rice may be obtained based on the weight.
(2) The above-described first embodiment illustrates several examples of the cooking modes. In addition to those modes, modes such as "rice ball mode", "sushi rice mode", and "frozen rice mode" may be provided for performing cooking suitable for the intended use of the cooked rice.
(3) The above-described first embodiment illustrates that the order instruction to the sales management server 40 is performed at the timing of switching to the warming process in the rice cooking operation of the cooking appliance M. However, the invention is not limited thereto. For example, the order instruction to the sales management server 40 may be performed, for example, every time a fixed period of time elapses or at a timing when the rice cooking operation of the cooking appliance M starts or when the power of the cooking appliance M is restored.

### [Second Embodiment]

Next, the second embodiment will be described. In the second embodiment, the cooking appliance M of the first embodiment is changed from a rice cooker to a coffee maker, and description of the contents common to the first embodiment will be omitted.

The coffee maker includes a water storage device, a heating device, an extraction device, etc. When the coffee maker starts to operate, the coffee maker executes a residual heat process, a steaming process, a dipping process, an extracting process, and an extruding process to extract liquid coffee from coffee powder. The coffee maker is equipped with basic sequences according to tastes such as mild and strong. Each process has parameters such as the amount of steam, the temperature of hot water, the extrusion pressure, the amount of water, etc.

The parameters can be changed according to the preference of the user. The parameters can also be changed according to the brewing methods recommended by the coffee shops and baristas around the world.

When the user selects a custom setting in a smartphone application, etc., a custom sequence can be executed based on variable parameters and a basic sequence that are associated with the custom setting.

When acquiring purchase information associated with a product identification code, the cooking management server generates a brand corresponding sequence based on the basic sequence of the product corresponding to the product identification code, and parameters corresponding to the brand (type) of the purchased coffee beans. Further, when preference information of the user is input, a custom sequence correcting the brand corresponding sequence is generated by parameters based on the preference information.

Thereby, the user of the coffee maker can brew delicious coffee by executing the custom sequence suitable for the type (brand) of the purchased coffee beans and also reflecting the preference. In addition, if the user wants to enjoy coffee different from the usual, by selecting a random mode, the user can enjoy coffee that is different from the preference of the user but brewed by brewing methods recommended by the coffee shops and baristas around the world. At this time, the information of the experts may be displayed on the smartphone, etc. for the user to confirm.

For example, when the cooking appliance M is a coffee maker, the consumer goods shipping information includes the type of coffee beans, the place of origin, the date of production, the degree of roast, etc. In addition, the water content (dryness) per unit amount, the protein content per unit amount, the lipid content per unit amount, the inorganic content per unit amount, the caffeine content per unit amount, granularity (shape and size of grain), etc. are examples of the consumer goods characteristic element. For a coffee maker, the factors to be multiplied by the cooking parameters include the temperature of hot water to be extracted, the amount of hot water to be extracted, the amount of steam, the fineness of steam, the time for applying pressure to coffee beans, etc. Furthermore, for example, values that reflect the brewing method of each coffee shop or barista may be prepared in advance as cooking parameters, and the user HI may select the cooking parameters of the coffee shop or barista the user HI prefers through the user terminal 21 to generate a custom sequence for executing the coffee extraction operation (cooking operation) on the coffee maker.

The coffee maker may also be set to allow the user to select between a preference mode that reflects the preference of the user, and a wonder experience mode that reflects the brewing method of each coffee shop or barista which has characteristics different from the preference of the user.

In other words, when the cooking appliance is a coffee maker, the cooking management system includes a custom sequence that is based on preference data reflecting the preference of the user and a custom sequence that is based on expert characteristic data. The cooking appliance M has a preset mode that is preset and a custom mode in which parameters can be set afterward. As the custom mode, the preference mode reflecting the preference data and the wonder experience mode reflecting the expert characteristic data having characteristics different from the preference data can be selectively executed.

Hereinafter, modified examples common to the first embodiment and the second embodiment will be described. The modified examples can be combined with each other if no contradiction occurs.
(1) The above-described embodiments illustrate that the cooking appliance M is provided with the communication function capable of short-distance wireless communication. However, the invention is not limited thereto. For example, the cooking appliance M may be provided with a function of connecting to the Internet line L (long-distance wireless communication function).
(2) The above-described embodiments illustrate that, in the cooking management server 60, the basic sequence is multiplied by the cooking parameters to construct the custom sequence, and the custom sequence is transmitted to the cooking appliance M. However, the invention is not limited thereto. For example, in the cooking management server 60, the cooking parameters alone may be extracted to be transmitted to the cooking appliance M, and the basic sequence stored on the side of the cooking appliance M may be multiplied by the received cooking parameters to construct the custom sequence. In other words, the sequence generation part 67 is not provided in the cooking management server 60, but the invention is not limited thereto. For example, the sequence generation part 67 may be provided in the cooking appliance M.
(3) The above-described embodiments illustrate that the order instruction part 66 is provided in the cooking management server 60 on the side of the manager H3. However, the invention is not limited thereto. For example, the order instruction part 66 may be provided in the cooking appliance M or the user terminal 21 on the side of the user HI. In other words, instead of sending the order instruction from the cooking management server 60 on the side of the manager H3 to the sales management server 40 on the side of the seller H2, the order instruction may be sent from the cooking appliance M or the user terminal 21 on the side of the user HI to the sales management server 40 on the side of the seller H2.
(4) The above-described embodiments illustrate that the side of the seller H2 provides the consumer goods identification code to the side of the manager H3. However, the invention is not limited thereto. For example, the side of the user HI may provide the consumer goods identification code to the side of the manager H3. In that case, for example, the user HI purchases consumer goods (rice or coffee beans) at a retail store or the like, and uses the function of the user terminal 21 to read the consumer goods identification code (for example, bar code, two-dimensional code, etc.) attached to the packaging of the consumer goods. Then, the consumer goods identification code of the consumer goods purchased by the user HI may be transmitted to the side of the manager H3 through the user terminal 21 and the Internet line L.
(5) The above-described embodiments illustrate that new consumer goods are automatically ordered when consumer goods run out. However, the invention is not limited thereto. For example, a confirmation display may be displayed to the user HI before a new order is placed. In that case, the confirmation display may be displayed through the display part 13 of the cooking appliance M, the display part of the user terminal 21, etc., and the user HI may confirm the order instruction when accepting the content of the new order instruction.
(6) The above-described embodiments illustrate that the communication device 20 and the user terminal 21 are provided on the side of the user HI. However, the invention is not limited thereto. For example, the side of the user HI may not be provided with the communication device 20 and the user terminal 21, but only the cooking appliance M.
(7) In the above-described embodiments, the cooking appliance M is a rice cooker or a coffee maker, for example. However, the cooking appliance M may be other cooking appliances having a cooking sequence. Other cooking appliances M may include, for example, a food processor, a home bakery, a rice cake machine, a yogurt maker, a mixer, a juicer, an oven toaster, etc.

### [Descriptions of Reference Numerals]

- 60:: Cooking management server
- 61:: Acquisition part
- 62:: Management memory part
- 67:: Sequence generation part
- M:: Cooking appliance
- HI:: User

## Claims

1. A cooking management method, comprising:
acquiring consumer goods shipping information associated with a product identification code corresponding to a cooking appliance;
acquiring user information which is information about a user of the cooking appliance corresponding to the product identification code;
generating a custom sequence suitable for the user based on the consumer goods shipping information and the user information; and
enabling the cooking appliance corresponding to the product identification code to download and execute the custom sequence.

2. The cooking management method according to claim 1, comprising:
converting the consumer goods shipping information into a plurality of consumer goods characteristic elements; and
converting the consumer goods characteristic elements and the user information into a cooking parameter,
wherein the custom sequence is generated based on the cooking parameter.

3. A cooking management system, comprising:
an acquisition part acquiring consumer goods shipping information associated with a product identification code corresponding to a cooking appliance;
a management memory part acquiring user information which is information about a user of the cooking appliance corresponding to the product identification code; and
a sequence generation part generating a custom sequence suitable for the user based on the consumer goods shipping information and the user information,
wherein the cooking appliance corresponding to the product identification code is enabled to download and execute the custom sequence.

4. The cooking management system according to claim 3, wherein the custom sequence comprises a custom sequence based on preference data reflecting preference of the user, and a custom sequence based on expert characteristic data,
the cooking appliance comprises a preset mode that is preset, and a custom mode in which parameters are settable afterward, and
a preference mode reflecting the preference data, and a wonder experience mode reflecting the expert characteristic data having characteristics different from the preference data are selectively executable as the custom mode.

5. A cooking management server, comprising:
an acquisition part acquiring consumer goods shipping information associated with a product identification code corresponding to a cooking appliance;
a management memory part acquiring user information which is information about a user of the cooking appliance corresponding to the product identification code; and
a sequence generation part generating a custom sequence suitable for the user based on the consumer goods shipping information and the user information,
wherein the cooking appliance corresponding to the product identification code is enabled to download and execute the custom sequence.

6. A cooking appliance downloading and executing a custom sequence suitable for a user, which is generated based on consumer goods shipping information associated with a product identification code, and user information which is information about the user corresponding to the product identification code.
